# EUROPEAN PATENT SPECIFICATION

(11) **EP 4 124 406 B1**
(45) Date of publication and mention of the grant of the patent: **06.03.2024**
(21) Application number: 21188378.0
(22) Date of filing: 29.07.2021
(51) Int. Cl.: B23K 26/16, B26D 7/18

(54) **CUTTING DEVICE AND METHOD FOR CUTTING AN ELECTRODE FOIL FOR A SECONDARY BATTERY CELL**
SCHNEIDVORRICHTUNG UND VERFAHREN ZUM SCHNEIDEN EINER ELEKTRODENFOLIE FÜR EINE SEKUNDÄRBATTERIEZELLE
DISPOSITIF DE DÉCOUPE ET PROCÉDÉ DE DÉCOUPE DE FEUILLE D'ÉLECTRODE POUR UNE CELLULE DE BATTERIE SECONDAIRE

(43) Date of publication of application: 01.02.2023
(73) Proprietor: Samsung SDI Co., Ltd., Yongin-si, Gyeonggi-do 17084 (KR)
(72) Inventor: Golubkov, Andrej, 8010 Graz (AT)
(74) Representative: Gulde & Partner

(56) References cited:
- EP-A1- 3 416 210
- CN-A- 111 633 329
- JP-A- H0 220 684

## Description

### Field of the Invention

The present invention relates to a cutting device for cutting an electrode foil, wherein the electrode foil is meant for use in a secondary battery cell, and in particular, for use in a secondary battery cell employable in power sources for electric or hybrid vehicles. The invention further relates to a method for cutting an electrode foil for a secondary battery cell.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor drives such as those in electric vehicles, hybrid vehicles, electric bicycles, or electric scooters. That is, the battery module is formed by interconnecting the electrode terminals of the plurality of unit battery cells depending on a required amount of power and in order to realize a high-power rechargeable battery.

Further, battery packs may be employed. A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

Lithium-ion cells or similar secondary battery cells typically comprise rolled or stacked anode, cathode, and separator foils. An anode electrode foil consists, for example, of a copper foil (e. g., 8 - 20 µm), which is covered with active anode material (e. g., Graphite, Silicon, Lithium titanate) usually on both sides, the active anode material on each side having a thickness of, e. g., 50 µm. A cathode electrode foil consists, for example, of an aluminum foil, which is similarly covered with cathode active material (e. g., LFP, NMC, NCA) on both sides. The separator is often an electrically non-conductive foil (e. g., 10 - 30 µm), which only conducts ions in electrolyte solution. The separator may be made of polyethylene (PE), polypropylene (PP), or a copolymer of PE and PP. The battery cell typically further comprises a housing or case filled with an electrolyte. The assembly of the anode electrode foil, the cathode electrode foil, and the separator foil is accommodated in the case or housing along with the electrolyte. The electrolyte may be an organic solvent, such as EC (ethylene carbonate), PC (propylene carbonate), DEC (diethyl carbonate), EMC (ethyl methyl carbonate), or DMC (dimethyl carbonate), and a lithium salt, such as lithium hexafluorophosphate (LiPF₆) or lithium tetrafluoroborate (LiBF₄). In addition, the electrolyte may be in a liquid, solid, or gel phase.

During manufacturing, both, anode and cathode foils (electrode foils) are cut into the right shape to fit the cell type. The cutting is preferably carried out with a laser cutter. Due to the laser beam focused on the intended cutting site, the material of the electrode foil to be cut vaporizes at the intended cutting site. However, splatter can be formed during laser cutting. The evaporated material and/or the splatter-particles may fall back and stick on the electrode foil, condense again and accumulate on the surface of the electrode foil in an undesirable manner. Of course, splatter can also be formed using other cutting methods such as a mechanical cutting.

Later, when using those electrode foils contaminated by splatter-particles in a battery cell, the particles may damage the separator and thus may cause internal short-circuit and self-discharge of the battery cell.

To avoid the contamination of the electrode foils during the cutting procedure, the splatter may be transported by the drag of a gas flow generated by an exhaust hood or an air knife. However, for example if the gas flow is uneven, splatter may still hit the foil. In other words, using a gas flow to drag away the splatter-particles from the surface of the electrode foil being cut may not ensure the desired quality of the manufactured electrode foils.

It is thus an object of the present invention to overcome or reduce at least some of the drawbacks of the prior art and to provide a cutting device for cutting an electrode foil for a secondary battery cell as well as a method for cutting an electrode foil for a secondary battery cell allowing for an improved quality of the cut electrode foils.

JP H02 20684 A, upon which the preamble of claim 1 is based, discloses a device having the purpose of efficiently capturing and eliminating a working scattered object by irradiating an object to be worked by laser light, and also, blowing gas from a nozzle, providing a suction chamber on the outside of its nozzle, and generating an electric field between said chamber and the object to be worked. Specifically, JP H02 20684 A describes that grooving working is executed by focusing the laser light by a condensing lens and irradiating an object to be worked which is installed on a moving means such as an X-Y table, etc. by said laser light. Simultaneously, the working effect is improved by blowing a turbulence of pressurized gas from a nozzle of a pressure chamber. In said laser scriber, the inside is sucked by providing a suction chamber on the outside of said nozzle. In such a way, a working scattered object is sucked and captured from a coaxial hole with said nozzle provided on a tip part of the suction chamber. Also, between said suction chamber and the object to be worked, an electric field is applied by a high voltage power source through an electrode. Therefore, said scattered object is electrified and sucked to said tip part by electrostatic force, and the suction effect of the scattered object is doubled.

Further, EP 3 416 210 A1 relates to a method for cutting a separator foil for an electrode assembly for a battery cell, the separator foil containing a polymer layer and a ceramic layer, by dint of a laser beam, the laser beam being emitted by an ultrashort pulse laser and consisting of ultrashort pulses of light, whereat the laser beam propagates in a propagation direction and is linear polarized in a vertical direction, and whereat the laser beam is directed onto the separator foil and is moved along the separator foil in a cutting direction. The invention also relates to a separator foil cut using the method according to the invention and a battery cell containing at least one such separator foil.

### Summary of Invention

Embodiments of the present disclosure seek to solve at least one of the problems existing in the prior art to at least some extent. In particular, according to a first aspect of the invention, a cutting device for cutting an electrode foil for a secondary battery cell is provided, the cutting device comprising: a cutting means configured for cutting an electrode foil; a suction means configured for applying an underpressure at one side of the electrode foil around an intended cutting site on the electrode foil by intaking gas into the suction means; a means for generating an electrostatic field; wherein the means for generating an electrostatic field comprises voltage source, a first electrode adapted for electrically connecting an electrode foil and a second electrode arranged at a distance from the electrode foil at an inlet opening of the suction means, when the electrode foil is placed for being cut by the cutting means. The second electrode is a grid.

Thereby, the cutting means, the suction means, and the second electrode may be mounted such to have fixed spatial positions relative to each other.

In one embodiment of the cutting device according to the invention, the grid is a planar grid. In embodiments of the cutting device according to the invention, the grid may be shaped in a lattice-like fashion, for example, by elongate wires arranged in parallel to each other so as form elongate spaces between any two adjacent wires. In alternative embodiments, the grid may be formed in a mesh-like or sieve-like manner, for example, by a first group of elongate wires arranged in parallel to each other and a second group of elongate wires arranged in parallel to each other such that the wires of the first group intersect the wires of the second group in a predefine angle, e. g., 90 degrees.

Electrically charged debris particles pulled by an underpressure and/or an electrostatic field (here and in the following also referred to as "electric field") into the direction of the suction means can then pass through the openings in the grid and then further into the body of the suction means. In the immediate vicinity of the grid, the equipotential surfaces of the electric field are essentially parallel to the grid.

In embodiments of the cutting device according to the invention, the grid may be planar, i. e., the grid's overall shape extends on a flat plane. When the electrode foil to be cut is positioned so as to be planar in the area around the intended cutting site, and the grid is planar and oriented parallel to the area of electrode foil around the intended cutting site, an electric field generated between the grid and the electrode foil will have essentially planar equipotential surfaces, which are parallel to the grid and the area of the electrode foil around the intended cutting site. This has the effect that the electric force exerted on electrically charged debris particles contaminating the electrode foil's surface as a result of the cutting process is essentially equal around the cutting sited or the intended cutting site.

In one embodiment of the cutting device according to the invention, the second electrode is positioned between the inlet opening of the suction means and the position of the electrode foil, when the electrode foil is placed for being cut by the cutting means.

The closer the second electrode is positioned to the electrode foil to be cut, the stronger is the electric field generated by the means for generating an electrostatic field between the electrode foil and the second electrode (for a fixed voltage, i. e., electrical potential, between the first and second electrode). Then, the stronger the generated electric field, the stronger is the force exerted on the electrode foil to be cut, i. e., the force by which electrical charged debris is pulled away from the surface of the electrode foil during the cutting procedure.

In one embodiment of the cutting device according to the invention, the second electrode is positioned in the inlet opening of the suction means. In other words, the second electrode may be mounted at the edge of the inlet opening of the suction means.

In one embodiment of the cutting device according to the invention, the second electrode is positioned within the suction means at a predefined distance from the inlet opening of the suction means. This may facilitate the mounting of the second electrode.

In one embodiment of the cutting device according to the invention, the cutting means is a mechanical cutting means such as a blade.

In an alternative embodiment of the cutting device according to the invention, the cutting means is a laser configured for generating a laser beam suitable for cutting the electrode foil. The laser beam may be pulsed.

In one embodiment of the cutting device according to the invention, the laser is an infrared laser. The infrared laser has preferably an output capacity in the range of 80 W to 1.5 kW, more preferably an output capacity in the range of 300 W to 1.0 kW, and most preferably an output capacity in the range of 500 W to 700 W.

In one embodiment of the cutting device according to the invention, the voltage source is a high voltage (HV) generator. The voltage source may be a direct current (DC) generator. Normally, a constant (high) voltage will be applied between the first and the second electrode.

In one embodiment of the cutting device according to the invention, the voltage source comprises a first terminal and a second terminal, and the electric polarity of terminals is reversible.

Usually, it does not play a role whether the first electrode is connected to the positive terminal of the voltage source and the second electrode is connected to the negative terminal of the voltage source, or whether, vice-versa, the first electrode is connected to the negative terminal of the voltage source and the second electrode is connected to the positive terminal of the voltage source. In other words, the direction of the electric field generated between the electrode foil and the second electrode is usually irrelevant.

However, there may be cases, depending on the material or material composition of the electrode foil to be cut, in which it is advantageous that the electric field generated between the electrode foil and the second electrode exhibits a specific orientation, i. e., that the field lines of the generated electric field either start in the electrode foil and end in the second electrode or, in other cases, vice-versa. Depending thereon, the electrical polarity (positive or negative) of the first and the second electrode must then be chosen.

In one embodiment of the cutting device according to the invention further comprises a holding means configured for holding at least an area of the electrode foil. The holding means may be arranged in a predefined spatial position with regard to the cutting means. In embodiments of the cutting device according to the invention, the holding means may comprise rolls or wheels. Then, by rotation of the rolls or wheels, the electrode foil to be cut can be conveyed, piece by piece, relative to the position of the cutting means such that an originally rather long piece of the foil material can then be cut into a series of smaller pieces having a predefined size.

In one embodiment of the cutting device according to the invention, the suction means comprises a fan or a pump. By a fan or a pump, gas can be actively moved into the suction means. The pump may be a vacuum pump. The gas may be air. Alternatively, also inert gases such as He, Ar, N₂ or mixtures thereof may be used. Also, reactive gases such as O₂, CO₂ or mixtures thereof or gas mixtures containing CO₂ and/or O₂ may be used.

In one embodiment of the cutting device according to the invention, the suction means comprises a connection port configured for establishing a connection with a gas transporting means. Then, the suction means can be connected, via a suitable gas transporting means, with an external suction device such as a pump or fan. The gas transporting means may be a hose.

In one embodiment of the cutting device according to the invention, the cutting device is designed for cutting an electrode foil for a secondary battery cell to be used in a battery for an electric vehicle or a hybrid vehicle.

In one embodiment of the cutting device according to the invention, the cutting device is designed for cutting an electrode foil for a secondary battery cell to be used in a mobile device such as a smartphone, a digital camera, a notebook, a tablet computer, or the like.

A second aspect of the invention is related to a method for cutting an electrode foil for a secondary battery cell, the method comprising the following steps:
a) providing an electrode foil to be cut;
b) holding, by a holding means, the electrode foil in a predefined position;
c) applying, by a suction means, an underpressure at one side of the electrode foil around an intended cutting site on the electrode foil;
d) electrically connecting the electrode foil with a first electrode of a means for generating an electrostatic field;
e) generating, by the means for generating an electrostatic field, an electrostatic field between the electrode foil and a second electrode of the means for generating an electrostatic field, the second electrode being a grid provided at an inlet opening of the suction means;
f) cutting, by a cutting means, the electrode foil at the intended cutting site.

The term "underpressure" shall denote a relative pressure of a gas when it is below the ambient pressure. Then, the pressure difference between the pressure of the gas in the region with underpressure and the pressure of the ambient gas is negative.

Step f) may be executed, while steps c) and e) are being performed. Preferably, steps c) and d) are performed at a time. The underpressure may be applied at that side of the electrode foil to be cut, which faces the second electrode.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a conventional battery cell;
- Fig. 2: illustrates schematically top-views on two examples of arrangements of a grid within a tube according to the first embodiment of the invention illustrated in Fig. 3;
- Fig. 3: illustrates a schematic sectional view of a cutting device according to a first embodiment of the cutting device according to the invention;
- Fig. 4: illustrates a schematic sectional view of a cutting device according to a second embodiment of the cutting device according to the invention;
- Fig. 5: illustrates a schematic sectional view of a cutting device according to a third embodiment of the cutting device according to the invention;
- Fig. 6: illustrates a schematic sectional view of a cutting device according to a forth embodiment of the cutting device according to the invention; and
- Fig. 7: illustrates a schematic sectional view of a cutting device according to a fifth embodiment of the cutting device according to the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

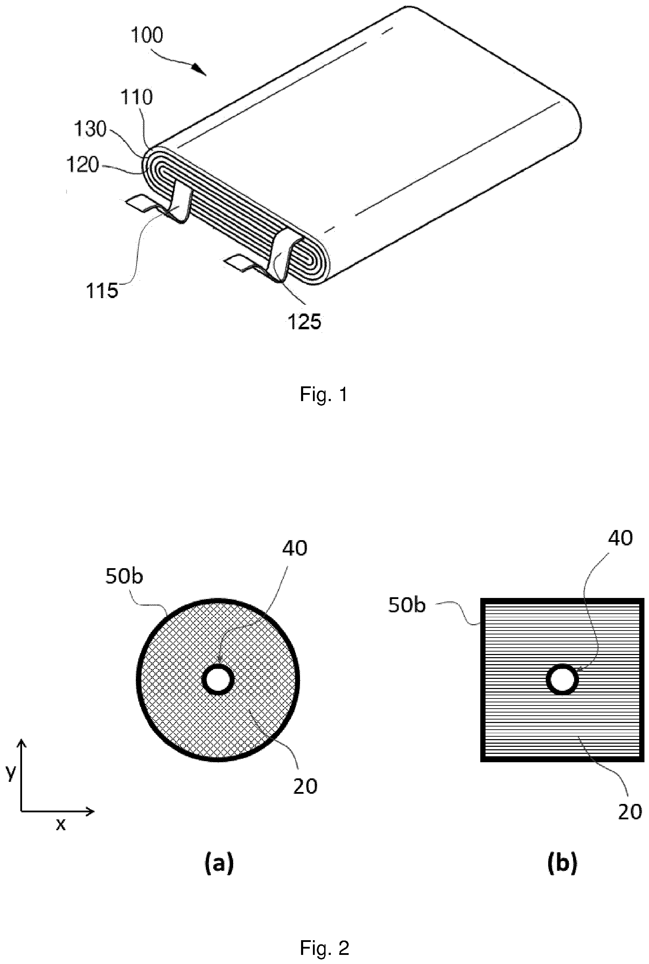

Figure 1 is a perspective view illustrating a secondary battery cell 100. The battery cell 100 may be a lithium-ion cell. The battery cell 100 comprises a first electrode foil 110, a second electrode foil 120, and a separator foil 130 interposed between the first electrode foil 110 and the second electrode foil 120. The battery cell 100 is configured such that a stacked structure of the first electrode foil 110, the second electrode foil 120, and the separator foil 130 is wound in a jelly-roll configuration. Here, the first electrode foil 110 may function as an anode and the second electrode foil 120 may function as a cathode. A first collector tab 115 is attached to the first electrode foil 110, and a second collector tab 125 is attached to the second electrode foil 120. The first collector tab 115 and the second collector tab 125 act as terminals of the battery cell 100. The separator foil 130 positioned between the first electrode foil 110 and the second electrode foil 120 to prevent electrical shorts and to allow movement of lithium ions. In the battery cell 100, the assembly of the first electrode foil 110, the second electrode foil 120, and the separator foil 130 is accommodated in a case or housing along with an electrolyte (not shown).

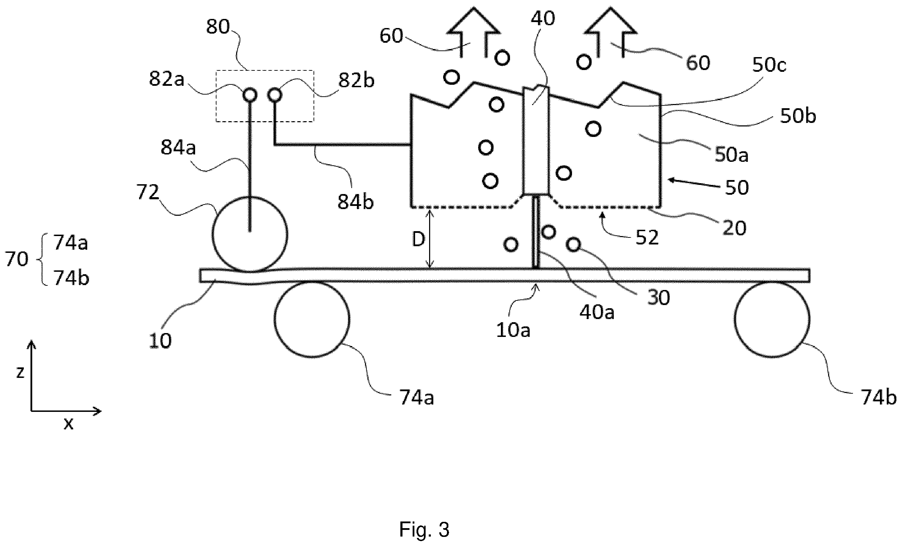

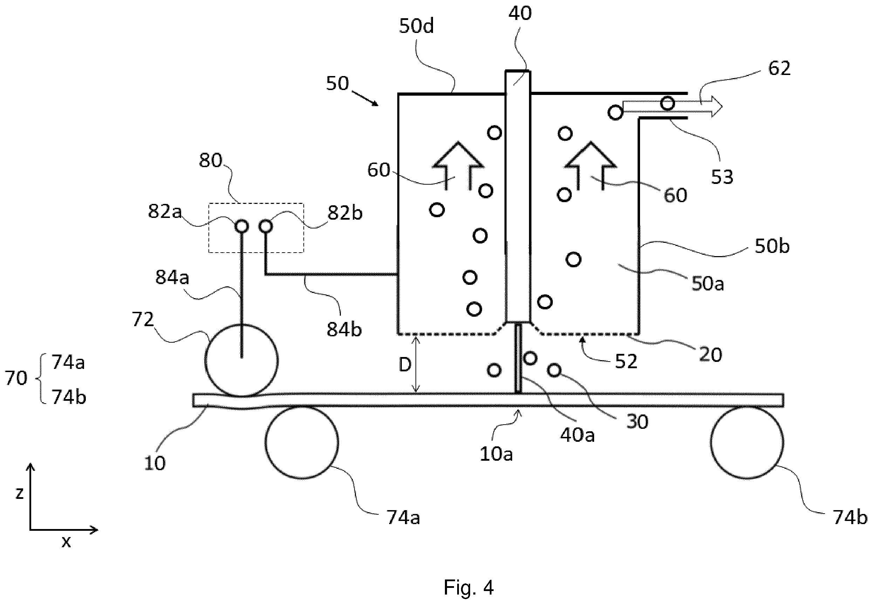

Figure 3 is a schematic sectional view of a first embodiment of the cutting device according to the invention. In addition, an area of an electrode foil 10 for the first electrode foil 110 or the second electrode foil 120, which is going to cut by the cutting device, is shown in the figure. To facilitate the description, a coordinate system with the orthogonal axes x and z it is also depicted in Fig. 3 as well as in the following Figs. 4-7. The cutting device comprises a laser 40 configured for generating a laser beam 40a, a suction means 50, and a means for generating an electrostatic field. The laser 40 is arranged within the interior 50a of the suction means 50 such that a laser beam 40a generated by the laser 40 is orientated against the direction of the z-axis of the coordinate system. The shown part of the suction means 50 is a tube or pipe 50b having an inlet opening 52 at its bottom side. The cross-section of the tube 50b across a plane perpendicular to the z-axis may be circular (see Fig. 2 (a)) or rectangular (see Fig. 2 (b)), however, other cross-sectional shapes are also possible, provided the inlet opening 52 of the tube 50b is arranged at its bottom side. The upper side of the suction means 50 is not shown in Fig. 3, which is indicated by the zig-zag line 50c. By an arrangement as described above, a laser beam 40a generated by the laser 40 will be ejected downwards (i. e., against the direction of the z-axis) out of the inlet opening 52 of the suction means 50.

Further, the shown area of the electrode foil 10 is held in a position by a holding means 70 comprising rolls or wheels 74a, 74b. The rolls or wheels 74a, 74b are configured to transport and electrode foil 10 in or against the direction of the x-axis of the shown coordinate system and to fasten the electrode foil 10 in a position such that an intended cutting site 10a, i. e., a spot of the electrode foil 10 that is going to be cut by the cutting device, is located directly below the laser 40. Here, the electrode foil 10 is supported by two supporting roles or wheels 74a, 74b.

Directly in the inlet opening 52 of the suction means 50 (i. e., at the bottom end of the tube 50b), a grid 20 made of a conductive material is arranged. The conductive material may be metal. The grid 20 essentially extends in a flat plane perpendicular to the z-axis and completely covers the inlet opening 52 of the suction means 50 except for the area, in which the laser 40 is arranged, or at least except for an area, through which a laser beam 40a generated by the laser 40 may pass. This is illustrated schematically in Fig. 2, showing two examples of the grid 20 in a top view, the grid 20 being mounted into the (inlet opening of) tube 50b. The y-axis of the coordinates system in Fig. 2 is orientated orthogonal to both, the x-axis and the z-axis of Figs. 3 - 7. In the example of Fig. 2 (a), the grid 20 is formed in mesh-like or sieve-like manner, i. e., a first group of elongate wires arranged in parallel to each other intersect, in an angle of 90 degrees, the wires of a second group of elongate wires also being arranged in parallel to each other. In Fig. 2 (a), the cross-section of the tube 50b of the suction means 50 has a circular shape. In the example of Fig. 2 (b), the grid 20 is formed in a lattice-like fashion, i. e., elongate wires are arranged in parallel to each other so as form elongate spaces between any two adjacent wires. In Fig. 2 (b), the cross-section of the tube 50b of the suction means 50 has a quadratic shape.

However, depending on the spatial position of the laser 40 arranged in the suction means 50, the grid 20 may be bent upwards or downwards in an area around the lower end of the laser 40. In the embodiment of the cutting device of Fig. 3, the grid 20 is slightly bent upwards so as to come spatially into contact with the bottom end of the laser 40. This way, any particle sucked from below into the suction means 50 must necessarily pass through the grid 20, i. e., to be more precise, through one of the numerous openings formed by the grid 20 (indicated by the gaps of the dashed line illustrating the grid 20 in the figure).

The means for generating an electrostatic field comprises a voltage source 80, for example, a high voltage (HV) generator. The voltage source 80 comprises a first terminal 82a and a second terminal 82b. In the embodiment shown in Fig. 3, the tube 50b of suction means 50 and a third roll or wheel 72 are also made of a conductive material such as a metal. By a first electric connection 84a (e. g., a cable), the first terminal 82a is electrically connected to the third roll or wheel 72. Likewise, by a second electrical connection 84b (e. g., a cable), the second terminal 82b is electrically connected to the tube 50b, which is in turn electrically connected to the conductive grid 20. Thus, both, the third roll or wheel 72 as well as the grid 20 will act as a first electrode and a second electrode, respectively, when a voltage is provided by the voltage source 80.

When the electrode foil 10 to be cut is held in the position as depicted in Fig. 3, the intended cutting site 10a is placed directly below the laser 40 such that a laser beam 40a ejected from the laser 40 will impinge upon the intended cutting site 10a on the upper side of the electrode foil 10. Due to the laser beam 40a focused on the intended cutting site 10a, the material of the electrode foil to be cut vaporizes at the intended cutting site 10a and eventually, the electrode foil 10 will be cut at the cutting site 10a.

However, splatter-particles 30 made of material expelled from the cutting site 10a are normally formed during this procedure.

In order to prevent those splatter-particles 30 from falling back onto the electrode foil 10, an underpressure is generated in the gas atmosphere on the upper side of electrode foil 10 in the area around the cutting site 10a. The underpressure is simply generated by intaking gas into the suction means 50, which is indicated in the figure by the upwardly directing arrows 60. Due to the same effect as caused by a vacuum cleaner, splatter-particles 30 will then be entrained with the upwardly directed drag of gas generated above the upper surface of the electrode foil 10 and eventually be discharged from the area around the cutting site 10a. Of course, the gaps in grid 20 must be chosen to have a suitable size such that any or at least a majority of splatter-particles 30 can pass the grid 20. (Note that in the drawings, the sizes of the splatter-particles are depicted in an exaggerated fashion in comparison to the sizes of the gaps in the grid 20 indicated by the intervals in the dashed line used for drawing the grid 20 for the sake of recognizability.)

However, for example if the gas flow generated by the suction means 50 is uneven, splatter-particles 30 may still drop down again hit the electrode foil 10. In order to prevent this, the upwardly directed force acting on the splatter-particles 30 caused by the gas flow effected by the suction means 50 is amplified by an electrostatic force. The electrostatic force is generated by the means for generating an electrostatic field. Specifically, an electrical potential difference is generated by the voltage source 80 between its first and second terminals 82a, 82b. Due to the electrical connections as described above, the third roll or wheel 72, which presses from above against the electrode foil 10, acts as an electrode transferring the electrical potential of the first terminal 82a of the voltage source 80 to the electrode foil 10. On the other hand, the electrically conductive tube 50b of the suction means 50 is kept at the same electrical potential as the second terminal 82b offer voltage source 80 (see above). As the electrically conductive grid 20 is connected to the edge of the inlet opening 52 of the tube 50b, its electrical potential is also kept on the same level as this of the second terminal 82b.

Consequently, an electric field arises between the grid 20 and the electrode foil 10. In the embodiment illustrated in Fig. 3, the grid 20 extends essentially planar and parallel to the surface of the electrode foil 10 between the two supporting rolls or wheels 74a, 74b. Thereby, the upper surface of the electrode foil 10 is held at a predefined distance D from the grid 20. Accordingly, the generated electric field exhibits essentially planar equipotential surfaces in the area around the cutting site 10a. Thus, in this area, the electrostatic force exerted on a splatter-particle 30 on or close to the upper surface of the electrode foil 10 is essentially constant, i. e., independent of the exact location relative from the cutting site 10a.

As the splatter-particles have been struck off, due to the cutting procedure, from the electrode foil 10, while the latter has been kept on the electric potential of the first terminal 82a of the voltage source 80, the splatter-particles 30 each carry a corresponding electric charge that causes, in the electric field generated between the electrode foil 10 and the grid 20, an upwardly directed force acting on the splatter-particles 30. In other words, the splatter-particles 30 are attracted by the grid 20 and repelled by the electrode foil 10. Thus, the standard-particles 30 are moved up in the electric field, i. e., in the direction of the z-axis of the depicted coordinate system. Hence, the forces exerted on the splatter-particles 30 by the electric field amplify the forces that already act on the splatter-particles 30 due to the gas flow effected by the suction means 50, in other words, the combination of electrostatic forces and drag by the gas flow improves the removal of the splatter-particles. Normally, the above-described effects are independent of the chosen electric polarity of the electrodes, i. e., it does usually not play a role, whether the first terminal 82a of the voltage source 80 is the PLUS terminal and the second terminal 82b is the MINUS terminal, or whether the polarity of the terminals 82a, 82b is reversed.

The electric field is not present in the area above the grid 20. However, due to the velocity the splatter-particles 30 gained while being moved up in the electric field in the area between the electrode foil 10 and the grid 20, and also by the dragging force caused by the gas flow, which is of course still present at the grid 20 and above the grid 20, the splatter-particles 30 pass through the gaps in the grid 20, are further sucked into the tube 50b of the suction means 50 and are finally discharged.

Figure 4 illustrates a schematic sectional view of a cutting device according to a second embodiment of the cutting device according to the invention. The assembly of this embodiment largely corresponds to the assembly of the first embodiment, which has been described above. However, in the second embodiment, the top of the tube 50b of the suction means 50 is closed in a gas-tight manner by a top cover 50d. Further, the suction means 50 comprises a connection port 53 arranged in the top area of the tube 50b. An external suction device (not shown) such as a vacuum pump can thus be coupled with the suction means 50, for example, via a hose (not shown) connected to the connection port 53. Then, an underpressure is generated by the external suction device within the interior 50a of the suction means 50. Finally, due to the underpressure within the interior 50a of the suction means 50, a gas flow is generated in the area below the inlet opening 52 of the suction means 50, i. e., in the area between the electrode foil 10 and the grid 20. The functioning of the remove of the splatter material caused by the cutting process has been described above in detail in the context of the first embodiment shown in Fig. 3. Specifically, the splatter-particles 30 are discharged in this embodiment of the cutting device via the connection port 53 as indicated by the arrow 62.

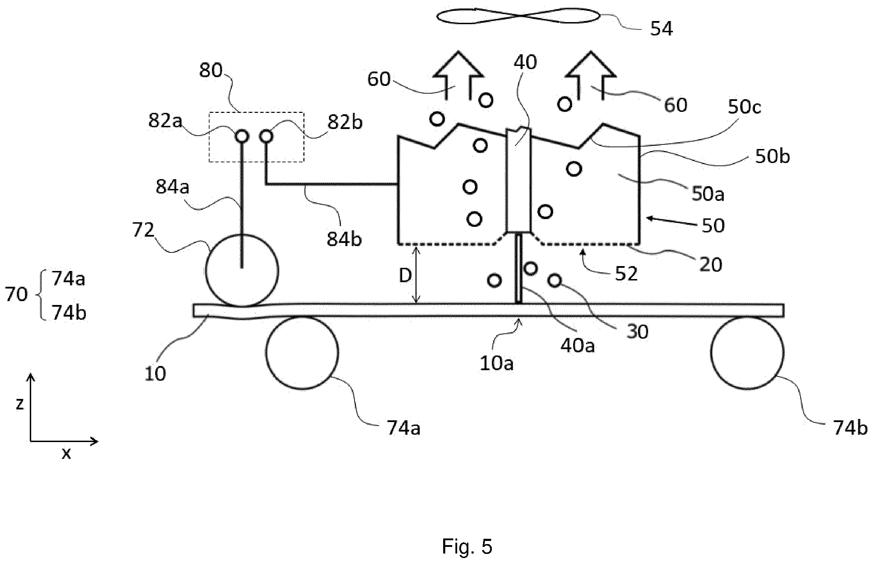

A cross-sectional view of an alternative third embodiment of the cutting device according to the invention is shown in Figure 5. The basic construction of the third embodiment again corresponds to that described above in the context of a first embodiment shown in Fig. 3. In contrast to the second embodiment (see Fig. 4), the suction means 50 comprises a fan 54 that is employed to generate an underpressure within the interior 50a of the suction means 50. The fan 54 may be arranged within the tube or pipe 50b of suction means 50. This is only schematically indicated in Fig. 5. Then, by rotating the fan 54 and suitable manner, ambient gas becomes sucked from the area below the inlet opening 52 into the direction of the z-axis of the coordinate system. Accordingly, gas is drawn from the area between the electrode foil 10 and the grid 20 through the grid 20 arranged in the inlet opening 52. In other words, unlike to the second embodiment shown in Fig. 4, the suction means 50 of the third embodiment is capable of actively generating underpressure and, as a consequence thereof, and upwardly directed gas flow in the area above the upper surface of the electrode foil 10 around the cutting site 10a. The functioning of the remove of the splatter material caused by the cutting process has been described above in detail in the context of the first embodiment shown in Fig. 3.

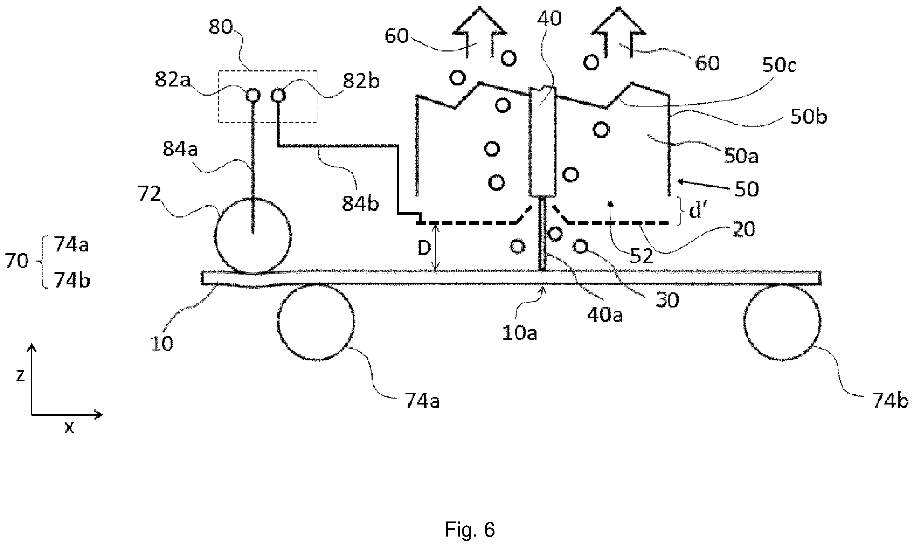

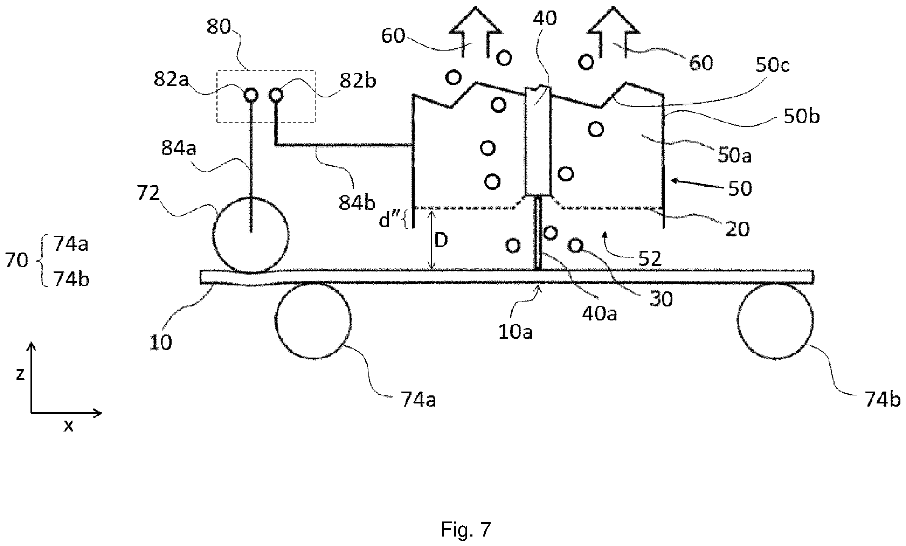

Figures 6 and 7 illustrate schematically two further embodiments of the cutting device according to the invention, which differ from the first embodiment by the position, in which the grid 20 is arranged with regard to the suction means 50 and possibly also with regard to the position of the electrode foil 10. This way, the distance between the electrode foil 10 and the inlet opening 52 of the suction means 50 (which influences the strength of the gas flow on the surface of the electrode foil 10) can be chosen independently from the distance D between the electrode foil 10 and the grid 20 (which influences the strength of the electric field present on the surface of the electrode foil 10). Except for the spatial arrangement of the grid 20, the embodiments shown in Figs. 6 and 7 correspond essentially to the construction of the first embodiment illustrated in Fig. 3.

In Figure 6, the grid 20 is arranged beneath the inlet opening 52 of suction means 50 at a distance d' from the latter. This may have two advantages: First, the gradient of the electric field generated between the electrode foil 10 and the grid 20 is increased when the distance D between the electrode foil 10 and the grid 20 is decreased in comparison to the assembly shown in Fig. 3 (provided that in both cases, the same potential difference is applied between the first electrode and the second electrode, i. e., the grid 20, by the voltage source 80), which leads to a stronger electric force acting on charge particles such as splatter in the vicinity of the surface of the electrode foil 10. Second, as there is no connection between the grid 20 and the tube 50b of the suction means 50, only the grid 20 needs to be kept on the level of the electric potential of the second terminal 82b of the voltage source 80 (thus, the grid 20 is connected directly, by the electric connection means 84b, to the second terminal 82b). The tube 50b of the suction means 50 can thus be held on a neutral electric potential, e. g., it can be grounded, if the tube 50b is made of a conductive material such as a metal. Alternatively, the tube 50b may be made of a non-conductive material such as plastics. (Of course, also in a variation of the first embodiment shown in Fig. 3, the grid 20 can be electrically isolated from the tube 52b and directly connected to the second terminal 82b of the voltage source; in this case, either an isolator is additionally required when mounting the grid 20 in the inlet opening 52 as shown in Fig. 3, or the tube 52b must be made of a non-conductive material.)

According to an alternative fifth embodiment, as illustrated in Figure 7, the grid 20 is arranged within the tube 50b of suction means 50 at a distance d" above the inlet opening 52 of suction means 50. The electric connection of the grid 20 to the second terminal 82b of the voltage source 80 can be established via the tube 50b (as shown in Fig. 7). Alternatively, the electric connection of the grid 20 to the second terminal 82b can also be directly established in the fashion shown in Fig. 5. In the latter case, the tube 50b may be grounded (if made of a conductive material) or may be made of a non-conductive material. In the embodiment of Fig. 7, the inlet opening 52 of suction means 50 can be brought close to the upper surface of the electrode foil 10, leading to an increase of the gas flow and thus to stronger mechanical force acting on debris such as splatter present on the upper surface of the electrode foil 10. Also, the mounting of the grid 20 according to the fifth embodiment may be easier in comparison to the arrangement of the first embodiment.

### Reference signs

- 10: electrode foil
- 10a: cutting site
- 20: grid / second electrode
- 30: splatter-particles
- 40: laser
- 40a: laser beam
- 50: suction means
- 50a: interior of the suction means
- 50b: tube or pipe
- 50c: zig-zag line indicating that the tube extends further
- 50d: top-cover
- 52: inlet opening
- 53: connection port
- 54: fan
- 60, 62: arrows indicating a direction of a gas flow
- 70: holding means comprising several rolls or wheels
- 74a, 74b: supporting rolls or wheels
- 72: third roll or wheel / first electrode
- 80: voltage source
- 82a, 82b: terminals
- 84a, 84b: electric connections

- 100: battery cell
- 110: first electrode foil
- 120: second electrode foil
- 130: separator foil
- 115: first collector tab connected to the first electrode foil
- 125: second collector tab connected to the second electrode foil

- x, y, z: axes of a coordinate system

## Claims

1. A cutting device for cutting an electrode foil (10) for a secondary battery cell (100), the cutting device comprising:
a cutting means configured for cutting an electrode foil (10);
a suction means (50) configured for applying an underpressure at one side of the electrode foil around an intended cutting site on the electrode foil by intaking gas into the suction means (50);
a means for generating an electrostatic field;
wherein the means for generating an electrostatic field comprises voltage source (80), a first electrode (72) adapted for electrically connecting an electrode foil (10) and a second electrode (20) arranged at a distance (D) from the electrode foil (10) at an inlet opening of the suction means (50), when the electrode foil (10) is placed for being cut by the cutting means,
**characterized in that** the second electrode (20) is a grid.

2. The cutting device according to claim 1, wherein the grid is a planar grid.

3. The cutting device according to claim 1 or 2, wherein the second electrode (20) is positioned between the inlet opening (52) of the suction means (50) and the position of the electrode foil (10), when the electrode foil (10) is placed for being cut by the cutting means.

4. The cutting device according to claim 1 or 2, wherein the second electrode (20) is positioned in the inlet opening (52) of the suction means (50).

5. The cutting device according to claim 1 or 2, wherein the second electrode (20) is positioned within the suction means (50) at a predefined distance (d") from the inlet opening (52) of the suction means (50).

6. The cutting device according to any one of claims 1 to 5, wherein the cutting means is a mechanical cutting means such as a blade.

7. The cutting device according to any one of claims 1 to 6, wherein the cutting means (40) is a laser (40) configured for generating a laser beam (40a) suitable for cutting the electrode foil (10).

8. The cutting device according to claim 7, wherein the laser (40) is an infrared laser; and
wherein the infrared laser has preferably an output capacity in the range of 80 W to 1.5 kW, more preferably an output capacity in the range of 300 W to 1.0 kW, and most preferably an output capacity in the range of 500 W to 700 W.

9. The cutting device according to any one of claims 1 to 8, wherein the voltage source (80) is a high voltage generator.

10. The cutting device according to any one of claims 1 to 9, wherein the voltage source (80) comprises a first terminals (82a) and a second terminal (82b), and wherein the electric polarity of terminals (82a, 82b) is reversible.

11. The cutting device according to any one of claims 1 to 10, further comprising a holding means (70) configured for holding at least an area of the electrode foil (10).

12. The cutting device according to any one of claims 1 to 11, wherein the suction means (50) comprises a fan (54) or a pump.

13. The cutting device according to any one of claims 1 to 11, wherein the suction means (50) comprises a connection port (53) configured for establishing a connection with a gas transporting means.

14. The cutting device for cutting an electrode foil (10) for a secondary battery cell (100) according to any one of claims 1 to 13,
wherein the secondary battery cell (100) is designed to be used in a battery for an electric vehicle or a hybrid vehicle; or
wherein the secondary battery cell (100) is designed to be used in a mobile device such as a smartphone, a digital camera, a notebook, a tablet computer, or the like.

15. A method for cutting an electrode foil (10) for a secondary battery cell (100), the method comprising the following steps:
a) providing an electrode foil (10) to be cut;
b) holding, by a holding means (70), the electrode foil (10) in a predefined position;
c) applying, by a suction means (50), an underpressure at one side of the electrode foil (10) around an intended cutting site (10a) on the electrode foil (10);
d) electrically connecting the electrode foil (10) with a first electrode (72) of a means for generating an electrostatic field;
e) generating, by the means for generating an electrostatic field, an electrostatic field between the electrode foil (10) and a second electrode (20) of the means for generating an electrostatic field, the second electrode (20) being a grid provided at an inlet opening of the suction means (50);
f) cutting, by a cutting means (40), the electrode foil (10) at the intended cutting site (10a).

## Patentansprüche

1. Schneidvorrichtung zum Schneiden einer Elektrodenfolie (10) für eine Sekundärbatteriezelle (100), wobei die Schneidvorrichtung umfasst:
ein Schneidmittel, das konfiguriert ist zum Schneiden einer Elektrodenfolie (10);
ein Saugmittel (50), das konfiguriert ist, um einen Unterdruck auf einer Seite der Elektrodenfolie um eine beabsichtigte Schneidstelle auf der Elektrodenfolie herum durch Ansaugen von Gas in das Saugmittel (50) aufzubringen;
ein Mittel zum Erzeugen eines elektrostatischen Feldes;
wobei das Mittel zum Erzeugen eines elektrostatischen Feldes eine Spannungsquelle (80), eine erste Elektrode (72), die zum elektrischen Verbinden einer Elektrodenfolie (10) angepasst ist, und eine zweite Elektrode (20) umfasst, die in einem Abstand (D) von der Elektrodenfolie (10) an einer Einlassöffnung des Saugmittels (50) angeordnet ist, wenn die Elektrodenfolie (10) platziert wird, um durch das Schneidmittel geschnitten zu werden,
**dadurch gekennzeichnet, dass** die zweite Elektrode (20) ein Gitter ist.

2. Schneidvorrichtung nach Anspruch 1, wobei das Gitter ein ebenes Gitter ist.

3. Schneidvorrichtung nach Anspruch 1 oder 2, wobei die zweite Elektrode (20) zwischen der Einlassöffnung (52) des Saugmittels (50) und der Position der Elektrodenfolie (10) positioniert ist, wenn die Elektrodenfolie (10) platziert wird, um durch das Schneidmittel geschnitten zu werden .

4. Schneidvorrichtung nach Anspruch 1 oder 2, wobei die zweite Elektrode (20) in der Einlassöffnung (52) des Saugmittels (50) positioniert ist.

5. Schneidvorrichtung nach Anspruch 1 oder 2, wobei die zweite Elektrode (20) innerhalb des Saugmittels (50) in einem vordefinierten Abstand (d") von der Einlassöffnung (52) des Saugmittels (50) positioniert ist.

6. Schneidvorrichtung nach einem der Ansprüche 1 bis 5, wobei das Schneidmittel ein mechanisches Schneidmittel, wie z. B. eine Klinge, ist.

7. Schneidvorrichtung nach einem der Ansprüche 1 bis 6, wobei das Schneidmittel (40) ein Laser (40) ist, der zur Erzeugung eines Laserstrahls (40a) konfiguriert ist, der zum Schneiden der Elektrodenfolie (10) geeignet ist.

8. Schneidvorrichtung zum Schneiden nach Anspruch 7, wobei der Laser (40) ein Infrarotlaser ist; und
wobei der Infrarotlaser vorzugsweise eine Ausgangsleistung im Bereich von 80 W bis 1,5 kW, noch bevorzugter eine Ausgangsleistung im Bereich von 300 W bis 1,0 kW und am meisten bevorzugt eine Ausgangsleistung im Bereich von 500 W bis 700 W aufweist.

9. Schneidvorrichtung nach einem der Ansprüche 1 bis 8, wobei die Spannungsquelle (80) ein Hochspannungsgenerator ist.

10. Schneidvorrichtung nach einem der Ansprüche 1 bis 9, wobei die Spannungsquelle (80) einen ersten Anschluss (82a) und einen zweiten Anschluss (82b) umfasst und wobei die elektrische Polarität der Anschlüsse (82a, 82b) umkehrbar ist.

11. Schneidvorrichtung nach einem der Ansprüche 1 bis 10, die ferner ein Haltemittel (70) umfasst, das zum Halten mindestens eines Bereichs der Elektrodenfolie (10) konfiguriert ist.

12. Schneidvorrichtung nach einem der Ansprüche 1 bis 11, wobei das Saugmittel (50) ein Gebläse (54) oder eine Pumpe umfasst.

13. Schneidvorrichtung nach einem der Ansprüche 1 bis 11, wobei das Saugmittel (50) eine Verbindungsöffnung (53) aufweist, die zum Herstellen einer Verbindung mit einem Gastransportmittel konfiguriert ist.

14. Schneidvorrichtung zum Schneiden einer Elektrodenfolie (10) für eine Sekundärbatteriezelle (100) nach einem der Ansprüche 1 bis 13,
wobei die Sekundärbatteriezelle (100) für die Verwendung in einer Batterie für ein Elektrofahrzeug oder ein Hybridfahrzeug vorgesehen ist; oder
wobei die Sekundärbatteriezelle (100) für die Verwendung in einer mobilen Vorrichtung wie einem Smartphone, einer Digitalkamera, einem Notebook, einem Tablet-Computer oder ähnlichem vorgesehen ist.

15. Verfahren zum Schneiden einer Elektrodenfolie (10) für eine Sekundärbatteriezelle (100), wobei das Verfahren die folgenden Schritte umfasst:
a) Bereitstellen einer zu schneidenden Elektrodenfolie (10);
b) Halten der Elektrodenfolie (10) durch ein Haltemittel (70) in einer vordefinierten Position;
c) Anlegen eines Unterdrucks an einer Seite der Elektrodenfolie (10) um eine vorgesehene Schnittstelle (10a) auf der Elektrodenfolie (10) herum durch ein Saugmittel (50);
d) elektrisches Verbinden der Elektrodenfolie (10) mit einer ersten Elektrode (72) eines Mittels zum Erzeugen eines elektrostatischen Feldes;
e) Erzeugen, durch das Mittel zum Erzeugen eines elektrostatischen Feldes, eines elektrostatischen Feldes zwischen der Elektrodenfolie (10) und einer zweiten Elektrode (20) des Mittels zum Erzeugen eines elektrostatischen Feldes, wobei die zweite Elektrode (20) ein an einer Einlassöffnung des Saugmittels (50) vorgesehenes Gitter ist;
f) Schneiden der Elektrodenfolie (10) an der vorgesehenen Schneidestelle (10a) durch ein Schneidmittel (40).

## Revendications

1. Dispositif de coupe pour découper une feuille d'électrode (10) pour un élément de batterie secondaire (100), le dispositif de coupe comprenant :
un moyen de coupe configuré pour découper une feuille d'électrode (10) ;
un moyen d'aspiration (50) configuré pour appliquer une pression négative au niveau d'un côté de la feuille d'électrode autour d'un site de coupe voulu sur la feuille d'électrode par admission de gaz à l'intérieur du moyen d'aspiration (50) ;
un moyen pour générer un champ électrostatique ;
dans lequel le moyen pour générer un champ électrostatique comprend une source de tension (80), une première électrode (72) adaptée pour connecter électriquement une feuille d'électrode (10) et une deuxième électrode (20) agencée à une distance (D) de la feuille d'électrode (10) au niveau d'une ouverture d'entrée du moyen d'aspiration (50), lorsque la feuille d'électrode (10) est placée pour être découpée par le moyen de coupe,
**caractérisé en ce que** la deuxième électrode (20) est une grille.

2. Dispositif de coupe selon la revendication 1, dans lequel la grille est une grille plane.

3. Dispositif de coupe selon la revendication 1 ou 2, dans lequel la deuxième électrode (20) est positionnée entre l'ouverture d'entrée (52) du moyen d'aspiration (50) et la position de la feuille d'électrode (10), lorsque la feuille d'électrode (10) est placée pour être découpée par le moyen de coupe.

4. Dispositif de coupe selon la revendication 1 ou 2, dans lequel la deuxième électrode (20) est positionnée dans l'ouverture d'entrée (52) du moyen d'aspiration (50).

5. Dispositif de coupe selon la revendication 1 ou 2, dans lequel la deuxième électrode (20) est positionnée dans le moyen d'aspiration (50) à une distance (d") prédéfinie de l'ouverture d'entrée (52) du moyen d'aspiration (50).

6. Dispositif de coupe selon l'une quelconque des revendications 1 à 5, dans lequel le moyen de coupe est un moyen de coupe mécanique tel qu'une lame.

7. Dispositif de coupe selon l'une quelconque des revendications 1 à 6, dans lequel le moyen de coupe (40) est un laser (40) configuré pour générer un faisceau laser (40a) adapté pour découper la feuille d'électrode (10).

8. Dispositif de coupe selon la revendication 7, dans lequel le laser (40) est un laser infrarouge ; et
dans lequel le laser infrarouge a de préférence une puissance nette dans la plage de 80 W à 1,5 kW, de préférence encore une puissance nette dans la plage de 300 W à 1,0 kW, et mieux encore une puissance nette dans la plage de 500 W à 700 W.

9. Dispositif de coupe selon l'une quelconque des revendications 1 à 8, dans lequel la source de tension (80) est un générateur de haute tension.

10. Dispositif de coupe selon l'une quelconque des revendications 1 à 9, dans lequel la source de tension (80) comprend une première bornes (82a) et une deuxième borne (82b), et dans lequel la polarité électrique des bornes (82a, 82b) est réversible.

11. Dispositif de coupe selon l'une quelconque des revendications 1 à 10, comprenant en outre un moyen de retenue (70) configuré pour retenir au moins une zone de la feuille d'électrode (10).

12. Dispositif de coupe selon l'une quelconque des revendications 1 à 11, dans lequel le moyen d'aspiration (50) comprend un ventilateur (54) ou une pompe.

13. Dispositif de coupe selon l'une quelconque des revendications 1 à 11, dans lequel le moyen d'aspiration (50) comprend un orifice de raccordement (53) configuré pour établir un raccordement avec un moyen de transport de gaz.

14. Dispositif de coupe pour découper une feuille d'électrode (10) pour un élément de batterie secondaire (100) selon l'une quelconque des revendications 1 à 13,
dans lequel l'élément de batterie secondaire (100) est conçu pour être utilisé dans une batterie pour un véhicule électrique ou un véhicule hybride ; ou
dans lequel l'élément de batterie secondaire (100) est conçu pour être utilisé dans un dispositif mobile tel qu'un smartphone, une caméra numérique, un notebook, une tablette PC, ou similaire.

15. Procédé pour découper une feuille d'électrode (10) pour un élément de batterie secondaire (100), le procédé comprenant les étapes suivantes :
a) la fourniture d'une feuille d'électrode (10) à découper ;
b) la retenue, par un moyen de retenue (70), de la feuille d'électrode (10) dans une position prédéfinie ;
c) l'application, par un moyen d'aspiration (50), d'une pression négative au niveau d'un côté de la feuille d'électrode (10) autour d'un site de coupe (10a) voulu sur la feuille d'électrode (10) ;
d) la connexion électrique de la feuille d'électrode (10) à une première électrode (72) d'un moyen pour générer un champ électrostatique ;
e) la génération, par le moyen pour générer un champ électrostatique, d'un champ électrostatique entre la feuille d'électrode (10) et une deuxième électrode (20) du moyen pour générer un champ électrostatique, la deuxième électrode (20) étant une grille prévue au niveau d'une ouverture d'entrée du moyen d'aspiration (50) ;
f) le découpage, par un moyen de coupe (40), de la feuille d'électrode (10) au niveau du site de coupe (10a) voulu.
